# EUROPÄISCHE PATENTSCHRIFT

(11) **EP 0 679 834 B1**
(45) Veröffentlichungstag und Bekanntmachung des Hinweises auf die Patenterteilung: **20.01.1999**
(21) Anmeldenummer: 95103297.8
(22) Anmeldetag: 08.03.1995
(51) Int. Cl.: F16N 31/00, F01P 11/06, F01M 11/04, B60S 3/00

(54) **Vorrichtung zum Warten und Reinigen von Fahrzeugen**
Apparatus for the servicing and cleaning of vehicles
Installation pour l'entretien et le nettoyage de véhicules automobiles

(30) Priorität: 26.04.1994 DE 4414452
(43) Veröffentlichungstag der Anmeldung: 02.11.1995
(73) Patentinhaber: WILHELM DE FRIES & Co., D-40599 Düsseldorf (DE)
(72) Erfinder: Abelen, Jakob, D-40593 Düsseldorf (DE)
(74) Vertreter: Türk, Gille, Hrabal

(56) Entgegenhaltungen:
- EP-A- 0 582 053
- DE-U- 9 109 059
- DE-U- 9 207 315
- DE-U- 9 308 735
- FR-A- 2 434 059
- FR-A- 2 630 385
- US-A- 5 062 500

## Beschreibung

Die Erfindung betrifft eine Vorrichtung zum Warten, Reinigen und sonstigen Unterhalten von Fahrzeugen wie Kraftfahrzeugen, beispielsweise LKW, Busse, bewegliche Arbeitsmaschinen aller Art und PKW, aber auch von anderen Fahrzeugen, beispielsweise Anhänger, Trailer usw.

Um derartige Fahrzeuge in einem zuverlässigen Betriebszustand zu erhalten, ist es erforderlich, diese von Zeit zu Zeit zu warten und zu reinigen, dabei gegebenenfalls auch das Motorenöl und das Kühlerwasser zu wechseln, Schmierstellen abzuschmieren und sonstige Wartungsarbeiten auszuführen, die Fahrzeuge aber auch äußerlich zu reinigen, insbesondere zu waschen. Diese Arbeiten werden bisher von Werkstätten ausgeführt, die hierfür verschiedene fest installierte Einrichtungen haben, welche weitgehend in den Boden eingebaut sind, d.h. bei den bekannten fest installierten Einrichtungen handelt es sich sozusagen im wesentlichen um Unterfluranlagen.

Fest installierte Einrichtungen aufweisende Werkstätten sind nicht in allen Fällen geeignet und befriedigend, um die Wartungsbedürfnisse von Fahrzeugen zu erfüllen. Insbesondere, wenn Wartungsarbeiten an verschiedenen Orten wirtschaftlicher auszuführen sind als in zentralen Werkstätten, besteht ein Bedarf für kostengünstige Vorrichtungen zum Warten von beispielsweise motorgetriebenen Fahrzeugen, die auch ortsveränderlich sind, keine hohen Installationskosten verursachen und auch ohne hohen zusätzlichen Aufwand und ohne zusätzliche behördliche Genehmigungen bei Bedarf erweitert bzw. ausgebaut werden können.

Zum Waschen von Fahrzeugen ist eine mobile und autonome Wascheinheit bekannt (FR-A-2434059), welche auf einer Plattform mit daran angeordneten Rampen eine gehäuseartige Überdachung aufweist, unter welche ein zu waschendes Fahrzeug gefahren werden kann. Diese mobile Wascheinheit weist mehrere Behälter zum Auffangen und Aufbereiten von Schmutzwasser auf, welche seitlich am Gehäuse angebracht sind. Bei der Autbereitung des Schmutzwassers erfolgt auch eine Abscheidung von im Schmutzwasser enthaltenen Kraftstoffen. Das mittels Pumpen von Becken zu Becken geförderte und dabei schrittweise gereinigte Schmutzwasser wird in einem geschlossenen System geführt und wieder für Reinigungszwecke eingesetzt. Diese bekannte Wascheinheit kann auf einen LKW verladen werden, um sie zu einem anderen Einsatzort zu transportieren.

Der Erfindung liegt die Aufgabe zugrunde, eine Vorrichtung zum Unterhalten wie Warten und Reinigen von Fahrzeugen wie motorgetriebenen Fahrzeugen, die auf dem Lande zu benutzen sind, zu schaffen, welche preiswert herzustellen, einfach zu handhaben, problemlos zu installieren und auch bei Bedarf zu erweitern ist, wobei diese Vorrichtung auch ortsungebunden betreibbar sein soll.

Diese Aufgabe wird erfindungsgemäß mit einer Vorrichtung der eingangs genannten Gattung gelöst, welche die Merkmale des Patentanspruches 1 aufweist. Vorteilhafte Ausgestaltungen der Erfindung sind Gegenstand der Unteransprüche.

Die erfindungsgemäße Vorrichtung ist eine Überflur-Vorrichtung oder -Anlage, welche eine Wartungs- und Reinigungsbühne mit zentraler Schmutzwasserableitung aufweist, wobei Schmutzwasser mittels Pumpensumpf, Ansaugleitung und Pumpe in einen Schlammfang und von dort weiter in einen Abscheider wie einen Leichtflüssigkeitsabscheider für mineralische Kohlenwasserstoffe (MKW) abgeführt werden kann. Um ein Emulgieren des Schmutzwassers zu vermeiden, werden vorzugsweise Membranpumpen eingesetzt.

In die Vorrichtung ist außerdem ein Altöl-Auffangbehälter integriert, in den Altöl aus einem Kraftfahrzeug durch einen Trichter, der an einen flexiblen Schlauch angeschlossen oder teleskopartig oder anders verlängerbar ist, von einer Pumpe direkt eingeleitet werden kann, so daß die erfindungsgemäße Vorrichtung auch für einen umweltneutralen Ölwechsel geeignet ist.

Ferner ist die erfindungsgemäße Vorrichtung mit einem Auffangbehälter für nicht mehr benötigte Kühlerflüssigkeit versehen, in den auszuwechselnde Kühlerflüssigkeit mittels eines Trichters und eines daran angeordneten flexiblen Schlauches oder eines teleskopartig oder anders verlängerbaren Trichters und einer Pumpe eingeleitet werden kann. Dementsprechend ist mit der erfindungsgemäßen Vorrichtung auch ein Kühlerflüssigkeitswechsel umweltneutral möglich.

Zusätzlich kann die erfindungsgemäße Vorrichtung mit einer beispielsweise aus Kunststoff bestehenden Box versehen sein, in welcher Altbatterien vorübergehend gelagert werden können, bevor sie in üblicher Weise entsorgt werden.

Schließlich ist die Vorrichtung auch mit Feuerlöschern auszurüsten, um gegen gegebenenfalls entstehende Brände geschützt zu sein und diese unmittelbar löschen zu können.

Die erfindungsgemäße Vorrichtung ist kompakt ausgebildet und auch ortsungebunden aufstellbar. Für die Installation der Vorrichtung sind keine Erdarbeiten erforderlich, so daß keine zeitraubenden Genehmigungsverfahren für die Installation und einen später eventuell gewünschten Ausbau erforderlich sind. Vielmehr ist die Vorrichtung insgesamt gebrauchsfertig und mit einem Stromanschluß, einem Wasseranschluß und einem Wasserabfluß versehen, welch letzterer beim Betreiber unmittelbar an das öffentliche Kanalsystem angeschlossen werden kann. Die erfindungsgemäße Vorrichtung kann auch zur Erweiterung oder zum Ersatz vorhandener Unterfluranlagen gleicher Art eingesetzt werden.

Bei der erfindungsgemäßen Vorrichtung können der Schlammfang, der Leichtflüssigkeitsabscheider und der Koaleszenzabscheider einzeln angebracht oder auch in einem gemeinsamen Gehäuse aus Edelstahl integriert sein. Dieser Abscheider hat keine beweglichen Teile und enthält auch keine Filterwolle, die regelmäßig erneuert werden müßte. Vielmehr ist der Abscheider für eine Nutzung für die gesamte Gebrauchsdauer der erfindungsgemäßen Vorrichtung ausgelegt, da in ihm vorgesehene Filterkassetten oder sonstige Filtereinsätze gereinigt und danach weiterverwendet werden können. Es ist jedoch zweckmäßig, zwei Sätze von Filtereinsätzen vorzusehen, damit ein Filtersatz stets zur Benutzung zur Verfügung steht, während der zweite Filtersatz gereinigt werden kann.

Da beim Betrieb der erfindungsgemäßen Vorrichtung beim Abscheiden von Schmutz- und Altstoffen im allgemeinen keine Emulsionen gebildet werden, benötigt man auch kein Spaltmittel zum Aufbereiten des anfallenden Schmutzwassers, bevor dasselbe als Abwasser in das öffentliche Kanalnetz eingeleitet werden darf oder im Kreislauf erneut benutzt wird.

Die bei der erfindungsgemäßen Vorrichtung vorgesehenen Pumpen arbeiten vorzugsweise mittels Druckluft. Wenn bei dem jeweiligen Betreiber kein ortsfester Druckluftanschluß zur Verfügung steht, kann die Vorrichtung zusätzlich mit einem Kompressor zum Erzeugen der benötigten Druckluft ausgestattet sein.

Die erfindungsgemäße Vorrichtung läßt sich an jedem Ort und insbesondere in jeder vorhandenen Halle aufstellen und ist sofort benutzbar. Im Gegensatz zu den bisher üblichen, in die Erde eingebauten Anlagen bzw. Unterfluranlagen fallen auch für den Betrieb keine zusätzlichen Gebühren für die Ableitung von Oberflächenwasser an, so daß auch in dieser Hinsicht ein wirtschaftlicher Vorteil gegeben ist.

Falls bei der Wartung von Kraftfahrzeugen jedoch Emulsionen anfallen, ist es ohne weiteres möglich, die erfindungsgemäße Vorrichtung mit einem Emulsionstrennanlage zu versehen. Auch lassen sich die Fahrzeugreifen mittels der vorhandenen Druckluft befüllen.

Es ist erfindungsgemäß auch möglich, mehrere zum Aufstellen und Warten von Kraftfahrzeugen bestimmte Rampen der erfindungsgemäßen Vorrichtung an eine einzige Entsorgungseinheit anzuschließen, d.h. also sozusagen miteinander zu vernetzen, so daß die erfindungsgemäße Vorrichtung besonders vorteilhaft genutzt werden kann.

Kfz-Fuhrparkbetreiber und -dienstleister rund um den Kfz-Service kennen die behördlichen Auflagen und die zu deren Erfüllung erforderlichen Einrichtungen. Aufwendige unterirdische Anlagen sorgen für eine Erfassung und Trennung der Leichtflüssigkeiten vom Wasser über Schlammfang, Benzin- und/oder Ölabscheider, Koaleszensabscheider und Probeentnahmeschacht. Neben den hohen Baukosten sind die ständigen Wartungskosten und die permanent steigenden Abgabe-Gebühren zur Totalentleerung der Abscheideranlage wesentliche Betriebskosten. Sollte sich die Anlage im Laufe der Zeit als zu klein erweisen, werden umfangreiche Tiefbauarbeiten, die Entsorgung der Altanlage, sowie die Anschaffung und Installation der neuen Anlage erforderlich.

Die erfindungsgemäße Überflur-Vorrichtung schafft hier Abhilfe und erfüllt durch ihren modulartigen Aufbau alle praktischen Anforderungen sicher und kostengünstig. Die selbsttragende Stahlkonstruktion der Vorrichtung, die in verzinkter Ausführung ausgeführt werden kann, ist beispielsweise als Arbeitsbühne für LKW für eine Radlast von sieben Tonnen ausgelegt, wobei sie eine Bauhöhe im befahrbaren Bereich von unter 30 cm aufweist. Eine Verlängerung des befahrbaren Bereichs ermöglicht es auch, längere Fahrzeuge wie beispielsweise Omnibusse auf dieser Vorrichtung zu warten. Die Verlängerung ist beispielsweise durch Einschub eines zusätzlichen Segmentes im befahrbaren Bereich der Vorrichtung möglich.

Für die Wartung von leichteren Fahrzeugen wie PKW kann auch eine Hebevorrichtung vorgesehen werden.

Ohne zusätzliche Erd- und Betonarbeiten wird die erfindungsgemäße Vorrichtung direkt auf den Boden gestellt und mittels Spindelfüßen im Niveau ausgerichtet und ist dann betriebsfertig. Bei Bedarf kann sie schnell und problemlos auch an einen anderen Standort gebracht und dort neu eingerichtet und somit aufgestellt werden.

Auf der Bühne der erfindungsgemäßen Vorrichtung werden das Motor- und das Getriebeöl sowie die Kühlerflüssigkeit über bewegliche Einlauftrichter erfaßt und entsprechenden Sammelbehältern mit einem großzügigen Speichervolumen von beispielsweise 500 Litern oder gar 950 Litern oder sogar größer zugepumpt. Mittels eines an der Bühne gelagerten Rollschlittens können die Unterseiten der aufgestellten Fahrzeuge inspiziert und die Abschmierpunkte derselben angefahren werden.

Im befahrbaren und begehbaren Bereich der erfindungsgemäßen Vorrichtung sind vorzugsweise zusätzliche auskragende Bleche vorgesehen, die ebenfalls zur zentralen Ablaufrinne geneigt sind, beispielsweise um ein Prozent, so daß die Arbeitsbühne auch als Waschbühne mit eindeutigen Gefälleverhältnissen genutzt werden kann. Die auskragenden Bleche dienen als Laufstege für die die Wartung am aufstehenden Fahrzeug ausführenden Personen. Als handgeführte Wascheinrichtung können eine Schaumkanone zur Vorwäsche im Motor- und Außenbereich sowie für die Schlußwäsche eine Waschlanze mit einstellbarer Strahlhärte und gegebenenfalls zwischengeschaltete druckerhöhender Elektropumpe vorgesehen sein. Auch ist es möglich, geführte Waschwalzen für die Außenreinigung von LKW und Bussen anzubauen.

Zur Aufnahme des beim Waschen entstehenden Schmutzwassers dient ein strömungstechnisch optimierter Schlammfang, der das Schmutzwasser an einen Leichtflüssigkeitsabscheider aus Chromstahl weitergibt. Dort werden die Leichtflüssigkeiten von einem eingebauten Koaleszensabscheider abgeschieden. Die abgeschiedenen Leichtflüssigkeiten bzw. Kohlenwasserstoffe fließen in einen Ölspeicher, während das gesäuberte Wasser nunmehr als Abwasser in die öffentliche Kanalisation eingeleitet oder optional im geschlossenen Kreislauf verbleibt und erneut verwendet werden kann, so daß sich eine Wasserersparnis von etwa 85 % erreichen läßt. Das Abscheidersystem ist nach den einschlägigen Vorschriften, z.B. nach DIN 1999, ausgelegt.

Für die Energieversorgung ist ein Anschluß an das öffentliche Stromnetz vorgesehen, weil die gesamte für den Betrieb der Vorrichtung benötigte elektrische Energie mit 220 Volt Spannung geliefert werden kann. Über den Energieanschluß mit Schutzschalter werden der Kompressor für die Druckluftpumpen, ein Füllstandsüberwachungssystem für die Füllstände im Altöltank, im Leichtflüssigkeitsabscheider und im Flüssigkeitstank, eine Hupe und ein optisches Warnsignal zum Anzeigen von Störungen sowie andere Einrichtungen mit der benötigten Energie versorgt.

Die Vorrichtung ist zweckmäßig weiter mit einer Sammelbox für alte Batterien versehen. Auch könnte eine Zapfsäule zur Betankung der gewarteten Fahrzeuge sowie auch eine Schmierstoffversorgung angebaut werden.

Dank der wartungs- und verschleißfreien Gestaltung der erfindungsgemäßen Vorrichtung ist deren Betrieb unproblematisch. Dadurch ist eine sichere Betriebsweise sowie eine lange Lebensdauer gewährleistet.

In der Zeichnung ist ein Ausführungsbeispiel einer erfindungsgemäßen Vorrichtung zum Warten, Reinigen und sonstigen Versorgen von motorgetriebenen und sonstigen Kraftfahrzeugen schematisch dargestellt, und zwar zeigt
- Fig. 1: eine teilweise geschnittene Seitenansicht der Vorrichtung in der Betriebsposition,
- Fig. 2: einen Querschnitt der Vorrichtung aus Fig. 1 nach Linie II-II in gegenüber Fig. 1 vergrößertem Maßstab und

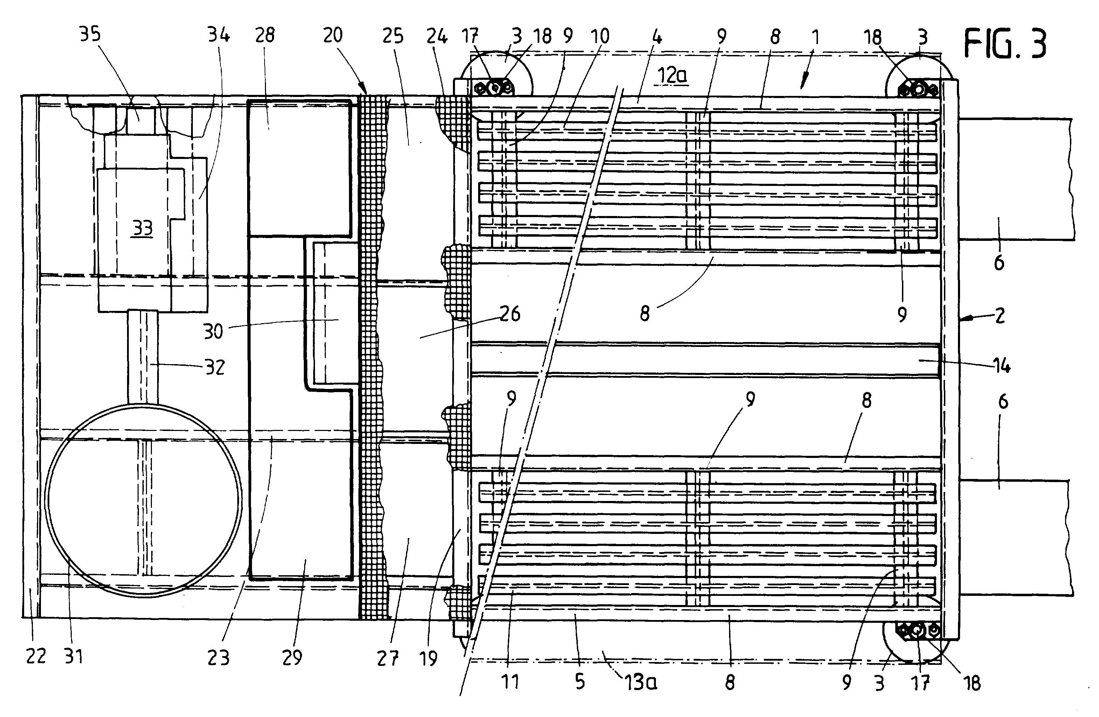

- Fig. 3: eine Draufsicht auf die Vorrichtung aus Fig. 1 und 2, etwa im Maßstab der Fig. 1.

Die in der Zeichnung gezeigte Vorrichtung (1) weist eine Rampe (2) auf, welche mittels höheneinstellbarer Füße (3) auf einer nicht dargestellten Unterlage angeordnet werden kann, um die Rampe (2) in ihrer horizontalen Ausrichtung justieren zu können. Die Rampe (2) dient als Standplatz für zu wartende und zu reinigende Fahrzeuge, die auf zwei parallelen Spuren (4 und 5) mit ihren Rädern abgestellt werden können. Zum Auf- und Abfahren der in der Zeichnung nicht dargestellten Fahrzeuge sind am freien Ende der Rampe (2) Keilstücke (6) angeordnet, die sich mit ihrer Unterseite (7) auf den in der Zeichnung nicht dargestellten Untergrund legen können, und zwar unabhängig von der Einjustierung der Rampe (2), da die Keilstücke (6) gelenkig mit der Rampe (2) verbunden sind.

Die beiden Spuren (4 und 5) sind in stabiler Konstruktion ausgebildet, welche ausreichende Tragfähigkeit hat, damit auch schwere Fahrzeuge wie LKW auf die Rampe (2) fahren und auf dieser sicher stehen können.

Jede der beiden Spuren (4 und 5) weist jeweils zwei in Längsrichtung verlaufende Randträger (8), hier hochkant stehende U-Träger, auf, die über Querholme (9) miteinander verbunden sind. Auf diesen Querholmen (9) sind in Längsrichtung der Rampe (2) verlaufende profilierte Träger (10 bzw. 11) angeordnet, auf denen Abdeckbleche (12 bzw. 13) aufliegen, welche schubfest mit den Randträgern (8) verbunden sind und die eigentliche Lauffläche der beiden Spuren (4 und 5) der Rampe (2) bilden.

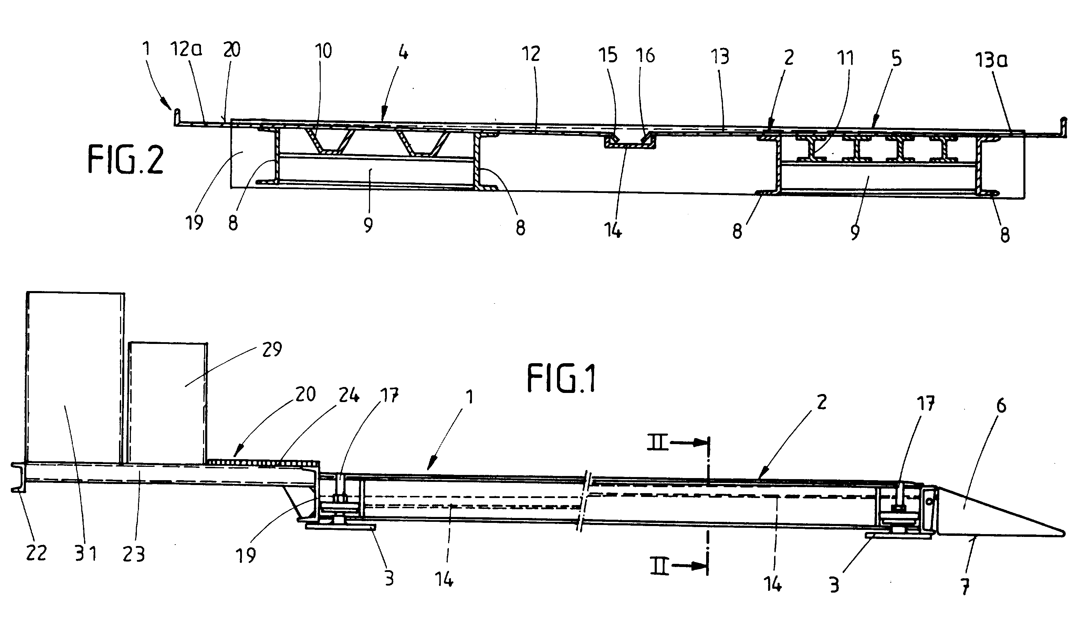

Gemäß Fig. 2 sind auf der linken Seite trapezförmige Träger (10) und auf der rechten Seite I-förmige Träger (11) vorgesehen. Dies sind zwei Alternativen für die Querschnittsform der Träger (10 und 11). Es sind jedoch auch andere Querschnittsformen für die in Längsrichtung verlaufenden Träger denkbar. Ebenso kann es sich entweder um Profilträger oder geschweißte Träger handeln.

Die auf den parallel zueinander verlaufenden Spuren (4 und 5) vorgesehenen Abdeckbleche (12 und 13) verlaufen mit einer Neigung von beispielsweise 1 % nach innen, so daß die Oberfläche der Spuren (4 und 5) insgesamt nach innen geneigt ist, wie Fig. 2 erkennen läßt.

Nach außen sind die Abdeckbleche (12 und 13) verlängert und bilden somit Laufstege (12a und 13a) für das Wartungspersonal. Diese Laufstege können mit einem nicht dargestellten Geländer versehen sein, das als Absturzschutz sowie zum Halten von Verkleidungen, beispielsweise als Spritzschutz, dient.

In der Mitte zwischen den beiden Spuren (4 und 5) ist eine Ablaufrinne (14) angeordnet, die von dem die Keilstücke (6) aufweisenden Ende der Rampe (2) zum entgegengesetzten Ende nach unten geneigt verläuft, beispielsweise mit einer Neigung von 1,5 %. Die Abdeckbleche (12 und 13) sind mit einer Neigung von beispielsweise 1 % nach innen zur Ablaufrinne (14) geneigt und enden in die Ablaufrinne mit Abschrägungen (15 und 16), damit von auf der Vorrichtung (1) stehenden Fahrzeugen ablaufende Flüssigkeiten in die Ablaufrinne (14) gelangen und durch diese zu den Entsorgungseinrichtungen der Vorrichtung (1) zwangsläufig fließen, beispielsweise zu einem Pumpensumpf, von wo die Flüssigkeiten zur weiteren Behandlung abgepumpt werden.

Mittels der höheneinstellbaren Füße (3), die jeweils eine Schraubenspindel (17) aufweisen, welche mit einer Mutter (18) zusammenwirkt, läßt sich bei der Aufstellung der Vorrichtung die gewünschte Neigung der Spuren (4 und 5) zur Horizontalen einstellen und somit die Vorrichtung positionsmäßig einjustieren, um die jeweils gewünschte Neigung der einzelnen Teile zu erzielen.

An die Rampe (2) ist über einen Querträger (19) eine Plattform (20) angebaut, auf bzw. an der Sammel- und Behandlungsbehälter angeordnet sind. Die Rampe (2) kann lösbar mit der Plattform (20) verbunden sein, so daß die Rampen (2) auch unabhängig von der Plattform (20) aufgestellt und betrieben werden können, damit man mehrere Rampen sozusagen mit einer zentralen Plattform vernetzen kann, um die auf einer Plattform vorhandenen Sammel- und Behandlungsbehältnisse entsprechend ihrer Kapazität optimal nutzen zu können.

Die Plattform (20) ist als Trägerrost ausgebildet, der aus dem Querträger (19), parallel zu diesem angeordneten weiteren Querträgern (22) sowie die Querträger verbindenden Längsträgern (23) gebildet ist.

In Fig. 1 ist die Plattform (20) als freier Kragträger ausgebildet, jedoch kann die Plattform (20) auch mit in der Zeichnung nicht dargestellten Füßen, die verstellbar sein können, oder sonstigen Stützen zum Abstützen auf dem nicht gezeigten Untergrund versehen sein.

Auf der Plattform (20) befinden sich in den begehbaren Bereichen hochklappbare Gitterroste (24).

Unter den begehbaren Gitterrosten (24) sind ein Pumpen-Sumpf (25) für abgängige Kühlflüssigkeit, ein weiterer Pumpen-Sumpf (26) für Schmutzwasser und ein dritter Pumpen-Sumpf (27) für Altöl angeordnet. Diese einzelnen Pumpen-Sümpfe sind durch die parallel zueinander verlaufenden Längsträger (23) und gegebenenfalls weitere, hier nicht näher dargestellte Einrichtungen voneinander getrennt. Falls es notwendig ist, Arbeiten an den unter den Gitterrosten (24) befindlichen Einrichtungen der Vorrichtung auszuführen, werden die Gitterroste an den entsprechenden Stellen hochgeklappt bzw. abgenommen.

Der Pumpen-Sumpf (25) für abgängige Kühlflüssigkeit und der Pumpen-Sumpf (27) für Altöl kann jeweils durch einen hier nicht näher dargestellten ortsveränderlichen Trichter, der an eine entsprechende Stelle unter einem zu wartenden oder zu reinigenden Kraftfahrzeug positioniert angeschlossen werden kann, befüllt werden, während in den Pumpen-Sumpf (26) für Schmutzwasser die Ablaufrinne (14) mündet.

Die ortsveränderlichen Trichter können an einem hier nicht dargestellten Rollschlitten angebracht werden, der sich entlang der Rampe (2) unterhalb eines aufstehenden Fahrzeuges in die jeweils gewünschte Betriebsposition verfahren und einstellen läßt.

Auf der Plattform (20) ist weiterhin ein Auffangbehälter (28) für aus dem Pumpen-Sumpf (25) kommende Kühlflüssigkeit und ein Auffangbehälter (29) für aus dem Pumpen-Sumpf (27) kommendes Altöl angeordnet. Zwischen diesen beiden Auffangbehältern befindet sich ein Schacht (30) für eine nicht näher dargestellte Pumpe, welche die Auffangbehälter (28 und 29) beschicken kann, und für eine weitere, ebenfalls nicht dargestellte Pumpe für den Transport des Schmutzwassers.

Außerdem ist auf der Plattform (20) ein Schlammfang (31) für aus dem Pumpen-Sumpf (26) kommendes Schmutzwasser angeordnet, der im Grundriß rund ausgebildet ist und in den über eine Einlaufschikane Schmutzwasser tangential eingeleitet wird, um durch kreisende Bewegung eine verbesserte Beruhigung des in der Vorrichtung anfallenden Schmutzwassers zu erzielen. Innerhalb des zylindrischen Schlammfanges (31) werden daher die Schweb- und Staubpartikel aus dem Schmutzwasser zyklonartig abgeschieden und können sich auf dem Boden des Schlammfanges absetzen.

An den Schlammfang (31) ist ein Überlaufrohr (32) angeschlossen, das in einen Abscheider (33) für Leichtflüssigkeiten mündet. An den Abscheider (33) ist ein Ölsammelbehälter (34) für im Abscheider (33) abgeschiedenes Öl angeschlossen. Das gereinigte Schmutzwasser kann als Abwasser durch einen Überlauf (35) zur Endeinleitung in das öffentliche Kanalsystem abfließen oder im Kreislauf innerhalb der Vorrichtung wiederverwendet werden.

Am Behälter (28) können ein oder mehrere Feuerlöscher stationär angeordnet sein.

Obwohl zwar einige spezielle Entsorgungseinrichtungen, die für die Wartung von Fahrzeugen aller Art benutzt werden können, beschrieben sind, kann die erfindungsgemäße Vorrichtung auch mit anders gestalteten Entsorgungseinrichtungen ausgestattet werden. Die Vorrichtung könnte auch für die Wartung von Schiffen und anderen Fahrzeugen ausgelegt werden.

## Patentansprüche

1. Vorrichtung zum Warten und Reinigen von Fahrzeugen, beispielsweise von motorgetriebenen Kraftfahrzeugen, Anhängern od. dgl., mit einer überflur bzw. oberirdisch mobil aufzustellenden Einrichtung (20) zum Auffangen, Reinigen und Entsorgen von beim Warten und Waschen von Fahrzeugen anfallenden Flüssigkeiten, die eine Überflur-Plattform mit darauf und/oder daran angeordneten Auffang-, Reinigungs- und Entsorgungseinrichtungen für Schmutzwasser, Altöl und Kühlerflüssigkeit ist, an welche wenigstens eine auf einem Untergrund bzw. oberirdisch aufstellbare Rampe (2), auf welche die zu wartenden Fahrzeuge für die Wartung auffahren können, unmittelbar angebaut ist, wobei jede Rampe (2) und/oder die Plattform (20) mit höheneinstellbaren Füßen (3,17,18) versehen ist.

2. Vorrichtung nach Anspruch 1, dadurch gekennzeichnet, daß jede Rampe (2) aus wenigstens einem Modul-Stück besteht und daß sie durch Einbau wenigstens eines weiteren Modul-Stückes verlängerbar ist.

3. Vorrichtung nach Anspruch 1 oder 2, dadurch gekennzeichnet, daß jede Rampe (2) zwei parallele Spuren (4,5) aufweist und mit Auffahrschrägen (6) versehen ist.

4. Vorrichtung nach einem der Ansprüche 1 bis 3, dadurch gekennzeichnet, daß jede Rampe (2) mit eine geschlossene Oberfläche bildenden Abdeckblechen (12,13) versehen ist, die zu einer zwischen den Spuren (4,5) angeordneten Ablaufrinne (14) geneigt verlaufen und über der Ablaufrinne enden.

5. Vorrichtung nach Anspruch 4, dadurch gekennzeichnet, daß jedes Abdeckblech (12,13) mit einer nach außen überstehenden Verlängerung (12a, 13a) versehen ist, die einen Laufsteg bildet und zur Anbringung einer Abdeckung wie eines Spritzschutzes dient.

6. Vorrichtung nach einem der Ansprüche 1 bis 5, dadurch gekennzeichnet, daß die Ablaufrinne (14) in Richtung zur Plattform (20) geneigt verläuft und in einen an der Plattform angeordneten Pumpen-Sumpf (26) für Schmutzwasser mündet.

7. Vorrichtung nach einem der Ansprüche 1 bis 6, dadurch gekennzeichnet, daß an der Plattform (20) ein Pumpen-Sumpf (27) für Altöl und ein Pumpen-Sumpf (25) für gebrauchte Kühlerflüssigkeit angeordnet ist, wobei jedem dieser Pumpen-Sümpfe jeweils ein Zulauf mit Trichter zum Einleiten der betreffenden Flüssigkeit zugeordnet ist.

8. Vorrichtung nach Anspruch 7, dadurch gekennzeichnet, daß jedem der beiden Pumpen-Sümpfe (25,27) jeweils ein Auffangbehälter (28 bzw. 29) für Kühlerflüssigkeit bzw. für Altöl nachgeschaltet ist.

9. Vorrichtung nach einem der Ansprüche 1 bis 8, dadurch gekennzeichnet, daß dem Pumpen-Sumpf (26) für Schmutzwasser ein Schlammfang (31) zum Abscheiden von Schmutzpartikeln und Schwebstoffen nachgeschaltet ist, an den ein Abscheidesystem für flüssige mineralische Kohlenwasserstoffe angeschlossen ist.

## Claims

1. Apparatus for servicing and cleaning vehicles, for example motor-driven motor vehicles, trailers or the like, comprising a device (20) which is to be set up in a mobile manner above ground or above floor level, for catching, cleaning and disposing of liquids which are produced when servicing and washing vehicles, which is an above-floor platform with catch, cleaning and disposal devices arranged thereon and/or thereat for dirty water, waste oil and radiator liquid, to which there is directly mounted at least one ramp (2) which can be set up on a foundation or above ground and on to which the vehicles to be serviced can drive for the servicing procedure, wherein each ramp (2) and/or the platform (20) is provided with adjustable-height feet (3, 17, 18).

2. Apparatus according to claim 1 characterised in that each ramp (2) comprises at least one module portion and that it can be prolonged by the installation of at least one further module portion.

3. Apparatus according to claim 1 or claim 2 characterised in that each ramp (2) has two parallel tracks (4, 5) and is provided with sloping drive-on portions (6).

4. Apparatus according to one of claims 1 to 3 characterised in that each ramp (2) is provided with cover plates (12, 13) which form a closed surface and which extend inclinedly to a drain channel (14) arranged between the tracks (4, 5) and terminate above the drain channel.

5. Apparatus according to claim 4 characterised in that each cover plate (12, 13) is provided with an outwardly projecting extension portion (12a, 13a) which forms a gangway and which serves to fit a cover means such as a spray protection means.

6. Apparatus according to one of claims 1 to 5 characterised in that the drain channel (14) extends inclinedly in a direction towards the platform (20) and opens into a pump sump (26) for dirty water, which is arranged at the platform.

7. Apparatus according to one of claims 1 to 6 characterised in that arranged at the platform (20) is a pump sump (27) for waste oil and a pump sump (25) for used radiator liquid, wherein a respective feed means with hopper for introducing the respective liquid is associated with each of said pump sumps.

8. Apparatus according to claim 7 characterised in that arranged downstream of each of the two pump sumps (25, 27) is a respective catch container (28 and 29 respectively) for radiator liquid and for waste oil.

9. Apparatus according to one of claims 1 to 8 characterised in that arranged downstream of the pump sump (26) for dirty water is a sludge trap (31) for the separation of particles of dirt and suspended substances, to which there is connected a separation system for liquid mineral hydrocarbons.

## Revendications

1. Installation pour l'entretien et le nettoyage de véhicules automobiles, par exemple de véhicules à moteur, de remorques ou de véhicules analogues, comprenant un équipement (20) à monter de façon mobile, de manière surélevée ou au-dessus du sol, pour récupérer, nettoyer et éliminer des liquides résultant de l'entretien et du lavage de véhicules, lequel équipement est une plate-forme surélevée comprenant, montés sur ladite plate-forme et/ou fixés sur celle-ci, des dispositifs de récupération, de nettoyage et d'élimination d'eaux usées, d'huiles usées et de liquides de radiateurs, plate-forme sur laquelle est montée directement au moins une rampe (2) pouvant par exemple être placée sur un sol d'infrastructure ou au-dessus d'un sol de fond, rampe sur laquelle peuvent accéder des véhicules en attente pour l'entretien, où chaque rampe (2) et/ou la plate-forme (20) sont dotées de pieds (3, 17, 18) réglables en hauteur.

2. Installation selon la revendication 1, caractérisée en ce que chaque rampe (2) se compose d'au moins une pièce modulaire et en ce qu'elle peut être prolongée en installant au moins une autre pièce modulaire.

3. Installation selon la revendication 1 ou 2, caractérisée en ce que chaque rampe (2) comprend deux pistes parallèles (4, 5) et en ce qu'elle est équipée de pentes d'accès (6).

4. Installation selon l'une quelconque des revendications 1 à 3, caractérisée en ce que chaque rampe (2) est dotée de tôles de recouvrement (12, 13) formant une surface fermée, qui sont placées de façon inclinée par rapport à une rigole d'écoulement (14) disposée entre les pistes (4, 5), lesdites tôles de recouvrement se terminant au-dessus de la rigole d'écoulement.

5. Installation selon la revendication 4, caractérisée en ce que chaque tôle de recouvrement (12, 13) est dotée d'un prolongement (12a, 13a) en saillie vers l'extérieur, lequel prolongement constitue une passerelle qui sert à appliquer un écran tel qu'une protection contre les projections.

6. Installation selon l'une quelconque des revendications 1 à 5, caractérisée en ce que la rigole d'écoulement (14) chemine en étant inclinée en direction de la plate-forme (20) et en ce qu'elle débouche dans un puisard d'aspiration (26) pour eaux usées, disposé sur la plate-forme.

7. Installation selon l'une quelconque des revendications 1 à 6, caractérisée en ce qu'un puisard d'aspiration (27) pour huiles usées et un puisard d'aspiration (25) pour liquides usés de radiateurs sont disposés sur la plate-forme (20) où une entrée, dotée d'un entonnoir pour introduire le liquide concerné, est associée à chacun des puisards d'aspiration respectifs.

8. Installation selon la revendication 7, caractérisée en ce qu'un bac de récupération (28 ou 29) de liquides de radiateurs ou d'huiles usées est monté en aval de chacun des deux puisards d'aspiration (25, 27) respectifs.

9. Installation selon l'une quelconque des revendications 1 à 8, caractérisée en ce qu'un piège à boues (31) est monté en aval du puisard d'aspiration (26) pour eaux usées, servant à séparer les particules d'impureté et les matières en suspension, piège à boues auquel est raccordé un système de séparation pour des hydrocarbures minéraux liquides.
